# EUROPÄISCHE PATENTANMELDUNG

(11) **EP 0 925 966 A2**
(43) Veröffentlichungstag der Anmeldung: **30.06.1999**
(21) Anmeldenummer: 98117326.3
(22) Anmeldetag: 12.09.1998
(51) Int. Cl.: B60G 17/005, B62D 65/00

(54) **Vorrichtung zum Blockieren einer Feder in einem Federbein**

(30) Priorität: 19.11.1997 DE 19751215
(71) Anmelder: Dr.Ing. h.c.F. Porsche Aktiengesellschaft, 70435 Stuttgart (DE)
(72) Erfinder: Lauer, Jürgen, 70565 Stuttgart (DE)

(57) **Zusammenfassung**

Es ist eine Vorrichtung zum Blockieren einer Feder in einem Federbein eines Kraftfahrzeuges über ein Distanzelement zum Transport eines Fahrzeugs vorgesehen, wobei das Distanzelement aus mindestens einem in die Feder einclipsbaren Segment besteht und sich mit einem unteren freien Ende an einem ortsfesten Federteller des Federbeines abstützt.

## Beschreibung

Die Erfindung bezieht sich auf eine Vorrichtung zum Blockieren einer Feder in einem Federbein nach dem Oberbegriff des Anspruchs 1.

Aus der DE 28 22 105 A1 ist eine Beeinflussung des Federweges einer Schraubenfeder eines Federbeines für ein Kraftfahrzeug über Distanzstücke bekannt. Diese sind an einer Platte über Schrauben gehalten und werden jeweils zwischen Federwindungen geklemmt.

Die Aufgabe der Erfindung besteht darin, eine Vorrichtung für eine Feder an einem Federbein eiens Kraftfahrzeuges zu schaffen, die über eine einfache Handhabung eine vollständige Blockierung der Feder zum Transport ermöglicht.

Diese Aufgabe wird erfindungsgemäß durch die Merkmale des Anspruchs 1 gelöst. Weitere vorteilhafte Merkmale beinhalten die Unteransprüche.

Die mit der Erfindung hauptsächlich erzielten Vorteile bestehen darin, daß das Distanzelement aus einem in die Feder schnell einclipsbaren und einfach wieder entfernbaren Segment aus einem hartelastischen Kunststoff besteht.

Das Einclipsen in die Windungen der Feder erfolgt in eine oder mehrere Lager-Aufnahmen des Distanzelements in der Weise, daß eine obere Aufnahme als Einfädel-Aufnahme dient und das Distanzelement um diese Lagerung auf den ortsfesten Federteller des Federbeines verschwenkt wird und sich hier abstützt. Die Abstützung erfolgt vorzugsweise in einer Aufnahmenut des Distanzelements. Eine Aufnahme im Distanzelement zur Lagerung der Federwindung ist zum Toleranzausgleich in Hochrichtung langlochförmig ausgebildet, wogegen die Einfädel-Aufnahme im Querschnitt eine kreisförmige Form aufweist.

Damit das Ein- und Ausclipsen in die Feder unbehindert und schnell durchführbar ist, sind zur Aufnahme der Federwindungen entsprechende Einführschrägen vorgesehen.

Zur Aufnahme der Windungen in die Aufnahmen sind desweiteren Einführkanäle vorgesehen, die eine geringere Höhe aufweisen als die Aufnahmen selbst, damit die Federwindungen nach Einnahme einer Raststellung in den Aufnahmen gefangen bleiben.

Zur genauen Anpassung des Distanzelements an die Federausbildung weisen die Aufnahmen einen entsprechend angepaßten bogenförmigen und schräggestellten Verlauf auf.

Ein Ausführungsbeispiel der Erfindung ist in den Zeichnungen dargestellt und wird im folgenden näher beschrieben.

Es zeigen
- Fig. 1: eine schaubildliche Darstellung eines in eine Feder eingeclipsten Distanzelements,
- Fig. 2: eine Ansicht auf das Distanzelement von vorne,
- Fig. 3: einen Schnitt durch das Distanzelement nach der Linie III- III der Fig. 2,
- Fig. 4: eine Ansicht auf das Distanzelement in Pfeilrichtung X und
- Fig. 5: eine schaubildliche Darstellung zum Einclipsen des Distanzelements.

Das Distanzelement 1 besteht vorzugsweise aus einem Segment 2 mit Lagerungs-Aufnahmen 3, 4 sowie einer Abstütznut 5 und ist vorzugsweise aus einem hartelastischen Kunststoff gebildet. Das Segment 2 ist in eine Feder 6 eines Federbeines 7 einclipsbar und stützt sich mit seinem unteren Ende 9 an einem ortsfesten Federteller F ab.

Das Segment 2 besteht wenigstens aus einem länglichen und relativ schmalen Teil und weist nahe einem oberen freien Ende 8 die Einfädel-Aufnahme 3 auf, welche in eine erste Federwindung einclipsbar ist.

Die weitere Aufnahme 4 liegt darunter, etwa mittig des Segmentes 2 und nimmt die zweite Federwindung auf. Am unteren freien Ende 9 ist die Aufnahmenut 5 im Segment 2 vorgesehen, die sich auf dem Rand des Federtellers F abstützt. Im dargestellten Beispiel sind nur zwei Aufnahmen 3 und 4 vorgesehen. Bei einer längeren Feder sind entsprechend mehr Aufnahmen denkbar.

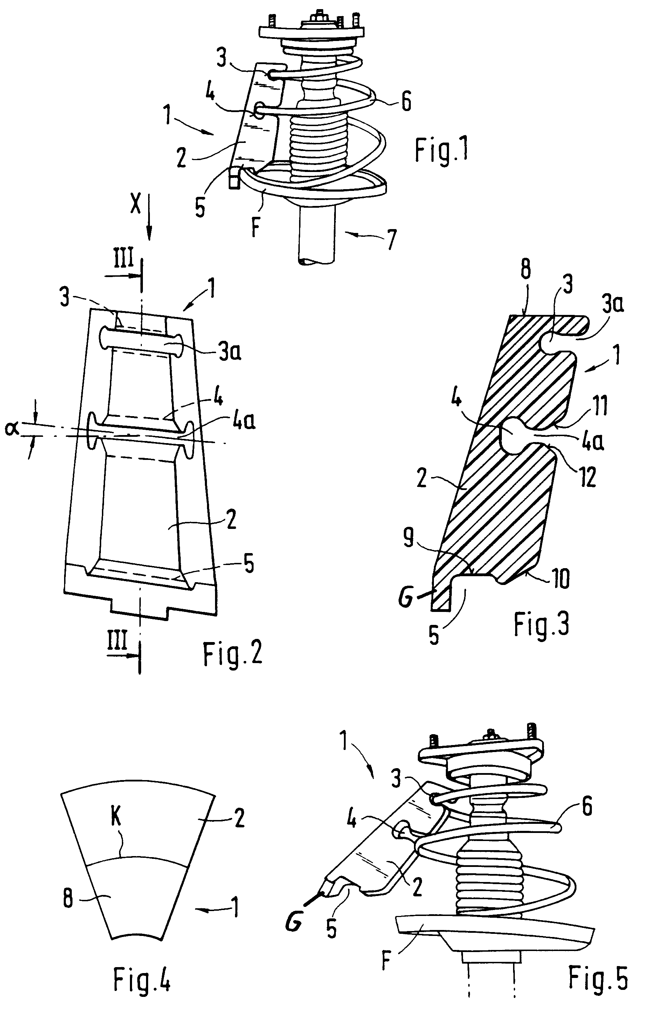

Wie in Fig. 5 näher gezeigt, wird das Segment 2 erst über die Einfädelungs-Aufnahme 3 in die Feder 6 eingeclipst. Danach wird das Segment 2, wie Fig. 1 näher zeigt, gegen die Feder 6 geschwenkt und mit der weiteren Aufnahme 4 in die Feder 6 eingeklemmt, so daß die Aufnahmenut 5 eine Abstützstellung auf dem Federteller F einnehmen kann.

Die Einfädel-Aufnahme 3 weist eine im Querschnitt runde Lagerung auf, die mit einem Einführkanal 3a versehen ist. Dieser Kanal 3a weist eine geringere Höhe auf als die Aufnahme 3.

Die weitere Aufnahme 4 ist in Hochrichtung langlochförmig ausgebildet und weist einen Einführkanal 4a auf, der ebenfalls eine geringere Höhe als das Langloch besitzt. Die Einführkanäle 3a und 4a sind derart schmal ausgeführt, daß die in die Aufnahmen 3 und 4 gefangenen Federwindungen nicht wieder herausrutschen können.

Die Aufnahme 4 ist mit der langlochförmigen Aufnahme 4 versehen um Toleranzen zwischen den Federwindungen ausgleichen zu können.

Am unteren Ende 9 des Segments 2 ist die Aufnahmenut 5 mit einer Montageschräge 10 versehen, die entsprechend mit Montageschrägen 11 und 12 am Einführkanal 4a der Aufnahme 4 ausgebildet sind. Von der Wandung der Nut 5 vorstehend ist ein Griffteil 6 vorgesehen, das eine gute Handhabung gewährleistet und ein einclipsen und herausziehen vereinfacht. Außerdem wird die eingeclipste Lage fixiert.

Die Aufnahmen 3 und 4 sowie die Aufnahmenut 5 weisen einen der Federwindung angepaßten Verlauf auf, wie insbesondere in Fig. 2 in Verbindung mit Fig. 4 zu erkennen ist. Die Aufnahmen 3 und 4 verlaufen, wie Fig. 2 näher zeigt, unter einem Winkel α und wie Fig. 4 näher zeigt, auf einem Kreisbogenabschnitt K.

## Patentansprüche

1. Vorrichtung zum Blockieren einer Feder in einem Federbein eines Kraftfahrzeuges über ein Distanzelement zum Transport eines Fahrzeugs, dadurch gekennzeichnet, daß das Distanzelement (1) aus mindestens einem in die Feder (6) einclipsbaren Segment (2) besteht und sich mit einem unteren freien Ende (9) an einem ortsfesten Federteller (F) des Federbeines (7) abstützt.

2. Vorrichtung nach Anspruch 1, dadurch gekennzeichnet, daß das Distanzelement (1) mehrere übereinanderliegende Lagerungs-Aufnahmen (3, 4) für Federwindungen der Feder (6) aufweist und an dem unteren freien Ende (9) eine dem Rand des Federtellers (F) zugerichtete Aufnahmenut (5) aufweist.

3. Vorrichtung nach den Ansprüchen 1 oder 2, dadurch gekennzeichnet, daß die am oberen freien Ende (8) des Distanzelements (2) angeordnete Aufnahme (3) als Einfädel-Aufnahme mit einer im Querschnitt runden Lagerung für eine erste Federwindung ausgebildet ist.

4. Vorrichtung nach den Ansprüchen 1, 2 oder 3, dadurch gekennzeichnet, daß die weitere Aufnahme (4) gegenüberliegende Montageschrägen (11, 12) mit einer in Hochrichtung langlochförmig ausgebildeten Lagerung für eine zweite Federwindung der Feder (6) aufweist.

5. Vorrichtung nach den Ansprüchen 1, 2, 3 oder 4, dadurch gekennzeichnet, daß die Aufnahmenut (5) am unteren freien Ende (9) eine sich zum oberen freien Ende (8) hin öffnende Montageschräge (10) aufweist.

6. Vorrichtung nach den Ansprüchen 1, 2, 3, 4 oder 5, dadurch gekennzeichnet, daß das Distanzelement (1) aus einem elastischen Material besteht.

7. Vorrichtung nach einem oder mehreren der vorhergehenden Ansprüche, dadurch gekennzeichnet, daß die Lagerungs-Aufnahmen (3, 4) für die Federwindungen der Feder (6) jeweils einen Einführkanal (3a, 4a) aufweisen, der eine geringere Höhe aufweist als die Lagerungs-Aufnahmen (3 und 4) selbst.

8. Vorrichtung nach einem oder mehreren der vorhergehenden Ansprüche, dadurch gekennzeichnet, daß die Aufnahment (5) sowie die Aufnahmen (3, 4) für die Federwindungen der Feder (6) Teil eines Kreisbogens (K) sind und dem Verlauf der Federwindungen angepaßt und unter einem Winkel (α) angeordnet sind.
